# EUROPÄISCHE PATENTSCHRIFT

(11) **EP 2 708 305 B1**
(45) Veröffentlichungstag und Bekanntmachung des Hinweises auf die Patenterteilung: **30.05.2018**
(21) Anmeldenummer: 12184339.5
(22) Anmeldetag: 13.09.2012
(51) Int. Cl.: B23K 20/12, C23C 30/00, B05D 1/00, C25D 5/02

(54) **Druckguss-Bauteil sowie Verfahren zu dessen Herstellung**
Pressure cast component and method for its manufacture
Composant coulé sous pression et son procédé de fabrication

(43) Veröffentlichungstag der Anmeldung: 19.03.2014
(73) Patentinhaber: HDO -Druckguss- und Oberflächentechnik GmbH, 33106 Paderborn (DE)
(72) Erfinder: Herberhold, Dr. Heinz, 59555 Lippstadt (DE); Stümpel, Josef, 33178 Borchen (DE)
(74) Vertreter: Albrecht, Ralf

(56) Entgegenhaltungen:
- EP-A1- 2 002 921
- EP-A1- 2 233 609
- EP-A2- 1 176 228
- WO-A1-2010/109505
- DE-A1-102010 043 046
- GB-A- 2 454 743

## Beschreibung

Die Erfindung betrifft ein insbesondere plattenförmiges Druckguss-Bauteil sowie ein Verfahren zu dessen Herstellung nach dem Oberbegriff von Anspruch 1.

Verfahren zur Herstellung von Druckguss-Bauteilen sind in unterschiedlichen Ausgestaltungen aus dem Stand der Technik bekannt. Im Rahmen dieser wird zunächst eine in der Regel aus einer sehr temperaturbeständigen Stahllegierung gefertigte, mehrteilig ausgebildete Druckgießform bereitgestellt. Die Form weist in ihrem Inneren einen Hohlraum auf, dessen Kontur der des zu erhaltenden Bauteils entspricht. Vor dem Gießvorgang wird die Druckgussform zunächst in der Regel auf eine Temperatur von einigen hundert Grad Celcius erwärmt. Im Anschluss wird eine flüssige Schmelze, insbesondere einer Metalllegierung, etwa einer Zink-, Magnesium- oder Aluminiumlegierung unter hohem Druck und hoher Geschwindigkeit in die Druckgussform gedrückt. Der Gießvorgang dauert dabei in der Regel nur einige zehn Millisekunden. Nachdem das Material erstarrt ist, kann die Druckguss-Form geöffnet und das fertige Druckguss-Bauteil entnommen werden.

Das Druckguss-Verfahren hat sich allgemein bewährt. Es können Bauteile in großen Stückzahlen gefertigt werden, was insbesondere im Rahmen von Serienproduktionen von Vorteil ist und die erhaltenen Bauteile zeichnen sich durch eine hohe Präzision aus. Es wird jedoch teilweise als nachteilig empfunden, dass die über das Druckguss-Verfahren erhältlichen Bauteile hinsichtlich ihrer möglichen Geometrie und insbesondere hinsichtlich ihrer maximalen Abmessungen begrenzt sind.

Aus der EP 2 002 921 A1 geht ein Verfahren zur Herstellung eines Druckgussbauteils hervor, bei dem zwei im Druckgussverfahren hergestellte metallische Basisbauteile derart nebeneinander positioniert werden, dass sie im Bereich jeweils wenigstens einer ihrer Außenkanten in Anlage kommen. Anschließend werden die benachbarten Basisbauteile unter Anwendung des Rührreibschweiß-Verfahrens miteinander verschweißt, so dass ein Bauteil erhalten wird. Dieses wird zumindest im Bereich der Schweißnaht bearbeitet, beispielsweise geschliffen und poliert, so dass das Bauteil eine glatte Oberfläche aufweist

In der GB 2 454 743 A wird ein Bauteil offenbart, welches ein metallisches Basisbauteil umfasst, auf das eine binäre TiCr-Beschichtung als Deck- oder Unterschicht zwecks Korrosionsschutz aufgebracht ist. Die binäre Beschichtung umfasst eine Basisschicht aus Chrom sowie eine auf die Chromschicht aufgebrachte TiCr-Schicht. Auf die binäre Beschichtung ist ferner ein Deckschichtensystem für dekorative Zwecke aufgebracht, welches eine untere Schicht aus TiN sowie eine obere Schicht aus Gold umfasst.

Aus der EP 2 233 609 A1 geht ein Verfahren zur Herstellung eines Bauteils hervor, welches einer Schwärzungsbehandlung unterzogen wird, um besonders gute lichtabsorbierende Eigenschaften zu erhalten und somit Lichtreflexionen zu vermeiden. Die lichtabsorbierende Beschichtung umfasst eine untere schwarze Schicht, welche Nickel und/oder Kobalt enthält, sowie eine auf der unteren Schicht vorgesehene obere Schicht, die ein aus Aluminium, Magnesium und Zink auswählbares Oxid beinhaltet.

Die DE 10 2010 043 046 A1 offenbart ein Verfahren zur Herstellung eines dekorativen Sanitärbauteils. Bei diesem wird zunächst auf ein Basisbauteil eine erste Metallschicht galvanisch aufgebracht. Anschließend wird auf die erste Metallschicht partiell ein Galvanikresistenzmittel gedruckt. Auf das Bauteil wird abschließend eine zweite Metallschicht abgeschieden, wobei sich diese nicht auf den Bereichen mit
dem Galvanikresistenzmittel niederschlägt, so dass eine strukturierte Oberfläche erhalten wird.

Schließlich geht aus der WO 2010/109505 A1 ein weiteres Druckgussbauteil hervor, auf welches ein Schichtsystem aufgebracht ist.

Ausgehend von diesem Stand der Technik ist es eine Aufgabe der vorliegenden Erfindung, Verfahren der eingangs genannten Art anzugeben, mit Hilfe dessen plattenförmige Druckguss-Bauteile hergestellt werden können, die sich durch vergleichsweise große Abmessungen sowie ein exzellentes optisches Erscheinungsbild auszeichnen. Darüber hinaus ist es eine Aufgabe der vorliegenden Erfindung, ein Druckguss-Bauteil mit derartigen Eigenschaften anzugeben.

Diese Aufgabe wird bei einem Verfahren der eingangs genannten Art durch die kennzeichnenden Merkmale von Anspruch 1 gelöst.
Des Weiteren wird die Aufgabe gelöst durch ein insbesondere plattenförmiges Druckguss-Bauteil, welches durch das vorgenannte Verfahren hergestellt wurde, mit wenigstens zwei, unter Anwendung des Rührreibschweißverfahrens miteinander verschweißten metallischen, insbesondere plattenförmigen Druckguss-Basisbauteilen, die zumindest im Bereich der Schweißnähte eine geschliffene und polierte Oberfläche aufweisen und mit einer auf die verschweißten, geschliffenen und polierten Basisbauteile aufgebrachten Dekorschicht.

Die Grundidee der Erfindung besteht mit anderen Worten darin, mehrere Basisbauteile, die zuvor unter Anwendung des Druckguss-Verfahrens hergestellt wurden und aus einem Metall bzw. einer Metalllegierung bestehen, durch Rührreibschweißen miteinander zu verbinden, um ein plattenförmiges Bauteil zu erhalten, welches die im Rahmen der gängigen Druckguss-Verfahren erhältlichen Abmessungen übersteigt. Die plattenförmigen Basisbauteile können beispielsweise aus einer Zink-, Aluminium- oder einer Magnesiumlegierung bestehen, welche sich als geeignete Materialien für das Druckgießen von Bauteilen erwiesen haben.

Für das Verschweißen werden die Basisbauteile nebeneinander gelegt und im Bereich jeweils zumindest einer ihrer Außenkanten in Anlage gebracht. Es können beispielsweise zwei plattenförmige Basisbauteile nebeneinander gelegt und miteinander Rührreibverschweißt werden, um ein größeres Bauteil zu erhalten. Alternativ können auch mehr als zwei Bauteile erfindungsgemäß miteinander verbunden werden.

Im Anschluss an den Rührreibschweiß-Vorgang wird das aus den mehreren basisbauteilen erhaltene Bauteil erfindungsgemäß zunächst geschliffen und anschließend poliert, um die im Rahmen des Rührreibschweißens gegebenenfalls verursachten Ungleichmäßigkeiten zu entfernen und ein Bauteil mit einer Oberfläche exzellenter Güte zu erhalten. Der Schleif- und der Poliervorgang kann auf den Bereich der Schweißnaht, bzw. den Bereich der mehreren Schweißnähte begrenzt sein, oder auch über weite Teile bzw. die gesamte Oberfläche des durch Schweißen erhaltenen Bauteils erfolgen. Das Bauteil zeichnet sich durch die erfindungsgemäß nach dem Schweißen durchgeführte Bearbeitung durch eine nahezu perfekt ebene Oberfläche aus.

Nachdem das Bauteil verschweißt, geschliffen und poliert wurde wird dieses mit einer Dekorschicht versehen, so dass es sich durch exzellente optische sowie haptische Eigenschaften auszeichnet und höchste ästhetische Anforderungen erfüllt.

Das erfindungsgemäße Verfahren vereint im Ergebnis die mit dem Druckgießen verbundenen Vorteile, insbesondere die in kurzer Zeit herstellbaren großen Stückzahlen bei vergleichsweise geringen Kosten, und die hohe Präzision der Bauteile mit der Möglichkeit, Bauteile mit großen Abmessungen erhalten zu können, die optisch und haptisch einwandfrei sind.

Der große Bedarf an serienmäßig fertigbaren Bauteilen, die trotz geringer Fertigungskosten einen sehr wertigen Eindruck machen, welcher beispielsweise im Automobil- und Sanitärbereich in großem Maße besteht, kann durch das erfindungsgemäße Verfahren und das hierdurch erhältliche plattenförmige Bauteil gedeckt werden.

Dabei ist erfindungsgemäß vorgesehen, dass die Basisbauteile auf einer Rückseite, die einer späteren Dekorseite gegenüberliegt, derart unter Anwendung des Rührreibschweiß-Verfahrens miteinander verschweißt werden, dass sich die Schweißnähte bis zur späteren Dekorseite erstrecken, das Bauteil auf seiner späteren Dekorseite zumindest im Bereich der Schweißnähte geschliffen und poliert wird, und die Dekorschicht auf die geschliffene und polierte Seite des Bauteils aufgebracht wird. Dies ist insbesondere für Basisbauteile zweckmäßig, die eine Wandstärke im Bereich von wenigen mm, insbesondere etwa 2 bis 3 mm aufweisen. Bei diesen Wandstärken entstehen durch den Rührreib-Schweißvorgang Schweißnähte, die sich durch die gesamte Wandstärke erstrecken. Das Bauteil kann dann auf der Seite geschliffen und poliert werden, die der Seite, auf der die Basisbauteile miteinander verschweißt wurden, gegenüber liegt, insbesondere im Bereich der Unterseite der Schweißnähte. Diese Seite ist dann die spätere Dekorseite des Bauteils, auf welche auch die Dekorschicht aufgebracht wird. Es hat sich herausgestellt, dass erfindungsgemäß Dekorbauteile erhalten werden, die sich durch eine Dekorschicht besonderer Ebenmäßigkeit und Güte auszeichnen.

Gemäß einer Ausführungsform der vorliegenden Erfindung ist vorgesehen dass als Dekorschicht eine Metallschicht insbesondere galvanisch auf das Bauteil aufgebracht wird. Die Dekorschicht kann dabei insbesondere aus Kupfer, Nickel oder Chrom oder auch einer Kupfer-, Nickel- oder Chromlegierung besteht. Die Galvanotechnik hat sich bewährt, um die Metallisierung von Oberflächen durchzuführen, wobei hohe ästhetische Ansprüche erfüllt werden können. Wird beispielsweise ein Zink-Druckguss-Bauteil verchromt, so zeichnet es sich im Ergebnis durch einen hohen Glanz aus und wirkt sehr edel und solide. Durch die derartige Beschichtung können auch im erheblichen Maße Produktionskosten eingespart werden. Die Basisbauteile können dann beispielsweise aus einem günstigeren metallischen Werkstoff unter Anwendung des Druckgussverfahrens gefertigt und galvanisch mit einer wertigeren Metallschicht versehen und auf diese Weise optisch sowie haptisch veredelt werden.

Alternativ zu der galvanisch aufgebrachten Metallschicht kann eine Lackschicht als Dekorschicht auf das Bauteil aufgetragen werden. Lacke haben sich ebenfalls als geeignet erwiesen, um das erfindungsgemäß verschweißte, geschliffene und polierte Bauteil zu veredeln. Bei dem Lack kann es sich um einen Hochglanz-Lack, insbesondere einen Klavier-Lack handeln. Derartige Lacke zeichnen sich durch einen besonderen Glanz sowie eine hohe Robustheit aus.

Um ein besonders ansprechendes optisches Erscheinungsbild zu erzielen, kann der Lack im Anschluss an die Aufbringung poliert werden.

In Weiterbildung der Erfindung kann vorgesehen sein, dass die plattenförmigen Basisbauteile eine im Wesentlichen rechteckige oder quadratische Grundform aufweisen. So kann beispielsweise aus mehreren kleineren rechteckigen oder quadratischen Platten eine größere rechteckige bzw. quadratische Platte als Bauteil erhalten werden.

Alternativ zu der rechteckigen oder quadratischen Grundform ist auch jede beliebige andere Form denkbar. Es können beispielsweise zwei plattenförmige Basisbauteile, die sich durch eine im Wesentlichen halbkreisförmige Grundform auszeichnen, miteinander erfindungsgemäß verbunden werden, um ein großflächiges plattenförmiges Bauteil mit im Wesentlichen kreisförmiger Grundform zu erhalten.

Insbesondere können alle Basisbauteile zueinander identisch ausgebildet sein, wodurch der Herstellungsprozess deutlich vereinfacht wird.

Hinsichtlich weiterer vorteilhafter Ausgestaltungen und Weiterbildungen der Erfindung wird auf die Unteransprüche sowie nachfolgende Beschreibung eines Ausführungsbeispiels unter Bezugnahme auf die beiliegende Zeichnung verwiesen. In der Zeichnung zeigt:
- Figuren 1a bis 1e: die erfindungsgemäßen Verfahrensschritte, wobei die Basisbauteile bzw. das Bauteil in schematischer Schnittdarstellung gezeigt sind.
- Figuren 2a bis 2d: die erfindungsgemäßen Verfahrensschritte, wobei die Basisbauteile bzw. das Bauteil in schematischer perspektivischer Darstellung gezeigt sind.
- Figuren 3a bis 3d: die erfindungsgemäßen Verfahrensschritte, wie in Figur 1 dargestellt, wobei Basisbauteile zum Einsatz kommen, die in ihrem unteren Bereich zumindest teilweise hohl ausgebildet sind.

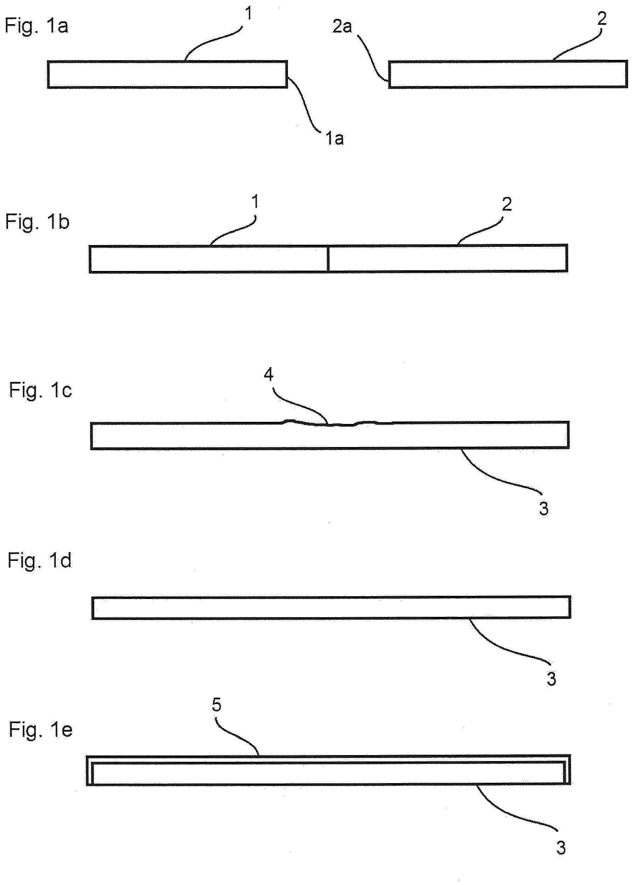

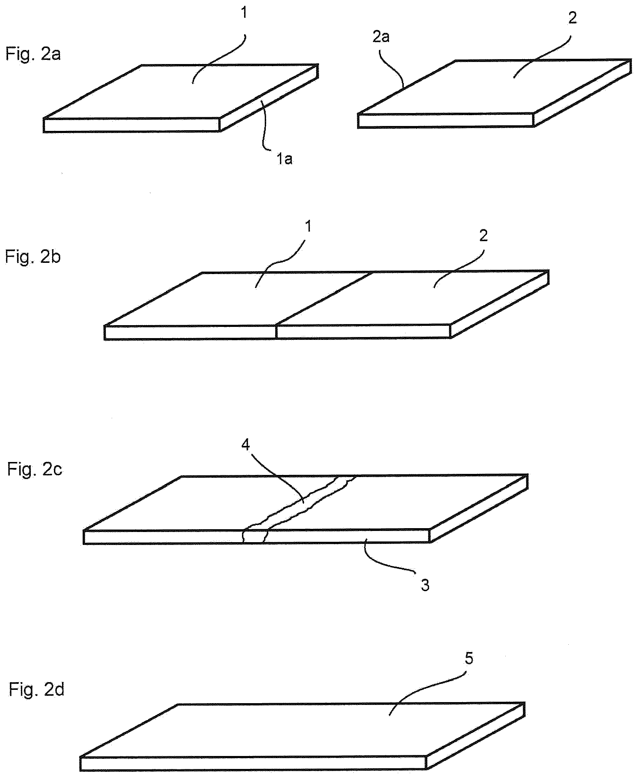

Die Figur 1a zeigt zwei im Druckguss-Verfahren hergestellte metallische Basisbauteile 1, 2, die aus einer Zinklegierung bestehen. Die Basisbauteile sind plattenförmig ausgebildet und weisen - wie der Figur 2a gut erkennbar - eine im Wesentlichen rechteckige Grundform auf. Die beiden Basisbauteile 1, 2 sind identisch ausgebildet und haben eine Wandstärke von etwa 2 bis 3 mm, eine Breite von etwa 20 cm sowie eine Tiefe von etwa 25 cm.

Zur Herstellung eines erfindungsgemäßen plattenförmigen Bauteils werden die Basisbauteile 1, 2 - wie in Figur 1a dargestellt - zunächst bereitgestellt. Im Anschluss werden die Basisbauteile 1,2 an jeweils einer ihrer längeren Außenkanten 1a, 2a derart aneinandergelegt, dass sie bündig abschließen. Dies ist in den Figuren 1b und 2b dargestellt.

Die benachbarten Basisbauteile 1, 2 werden unter Anwendung des Rührreibschweiß-Verfahrens miteinander verschweißt, so dass ein Bauteil 3 erhalten wird. Wie in Figur 1c bzw. 2c gut zu erkennen ist, weist das erhaltene Bauteil 3 eine durch den Rührreibschweiß-Vorgang verursachte Schweißnaht 4 auf.

Werden alternativ zu der hier dargestellten Ausführungsform mehr als zwei Bauteile miteinander verschweißt, so weist das erhaltene Bauteil mehr als eine Schweißnaht 4 auf.

Im Anschluss an das Schweißen wird die gesamte in den Figuren 1c und 2c nach oben weisende Fläche des erhaltenen Bauteils 3 geschliffen, so dass die durch das Rührreibschweißen im Bereich der Schweißnaht 4 verursachten Unregelmäßigkeiten, die insbesondere in der in Figur 1c dargestellten Schnittdarstellung zu erkennen sind, durch Materialabtragung ausgeglichen werden.

Danach wird das erhaltene Bauteil 3 über die gesamte geschliffene Oberfläche poliert, so dass das Bauteil 3 eine besonders hohe Oberflächengüte aufweist, wie in Figur 1d angedeutet.

Nach dem Schleifen wird auf das Bauteil 3 eine Dekorschicht 5 aufgebracht. Bei der dargestellten Ausführungsform wird als Dekorschicht 5 eine Metallschicht aus einer Chromlegierung galvanisch auf das Bauteil 3 aufgebracht.

Alternativ zu der dargestellten Ausführungsform kann auch die in der Figur nach unten weisende Seite der Bauteils 3 die spätere Dekorseite bilden. Dafür werden die Basisbauteile 1, 2 zunächst, wie in der Figur 1c dargestellt, von oben her Rührreib-Verschweißt. Anschließend wird das erhaltene Bauteil 3 auf seiner nach unten weisenden Seite zumindest im Bereich der Unterseiten der Schweißnähte poliert und geschliffen. Abschließend wird die Dekorschicht auf die polierte und geschliffene Seite aufgebracht. Die Dekorseite des Bauteils 3 ist gemäß dieser alternativen Ausführungsform dann die in der Figur 1 nach unten weisende Seite.

Ferner kann - ebenfalls alternativ zu der der dargestellten Ausführungsform - anstelle der Chromschicht eine Lackschicht, insbesondere eine Klavier-Lackschicht auf das geschliffene und polierte Bauteil aufgebracht werden, die im Anschluss poliert wird.

Wie in der Figur 1e gut zu erkennen ist, erstreckt sich die galvanisch aufgebrachte Chromschicht 5 über die gesamte Oberseite sowie die Seitenränder des Bauteils 3.

Im Ergebnis wird ein großflächiges plattenförmiges Bauteil 3 erhalten, welches sich durch eine exzellente Oberflächengüte sowie ein hervorragende optische und haptische Eigenschaften auszeichnet, insbesondere eine sehr ebenmäßige Oberseite aufweist.

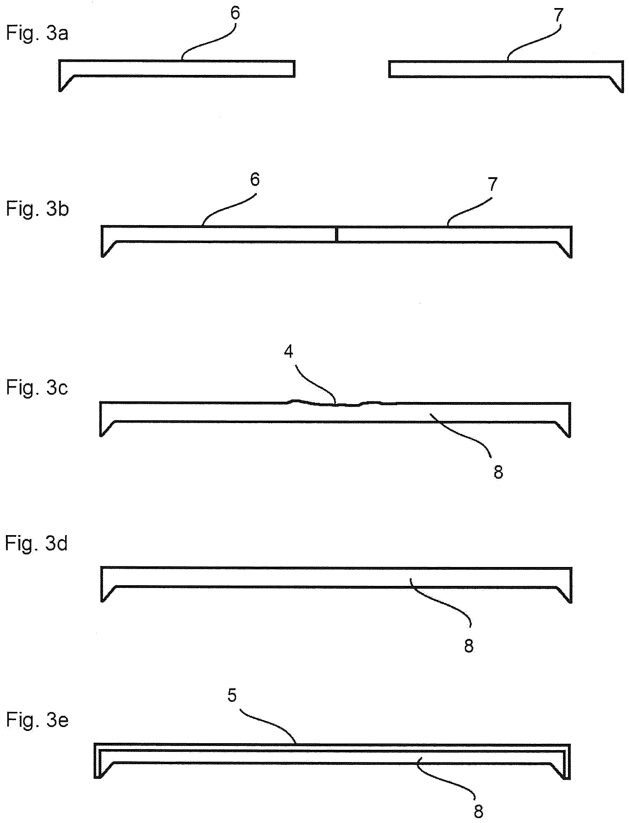

Alternativ zu den in den Figuren 1 und 2 dargestellten massiv ausgebildeten plattenförmigen Basisbauteilen 1, 2, können zur Einsparung von Material erfindungsgemäß auch plattenförmige Basisbauteile 6, 7 bereitgestellt werden, die, wie in der Figur 3 in der Schnittdarstellung gezeigt, in ihrem unteren Bereich zumindest teilweise hohl ausgebildet sind.

Die plattenförmigen Basisbauteile 6, 7 werden erfindungsgemäß durch die bereits im Zusammenhang mit den Figuren 1 und 2 beschriebenen Verfahrensschritte miteinander verschweißt, geschliffen, poliert und mit einer Dekorschicht 5 versehen, um ein erfindungsgemäßes plattenförmiges Bauteil 8 zu erhalten, welches in seinem unteren Bereich zumindest teilweise hohl ausgebildet ist

## Patentansprüche

1. Verfahren zur Herstellung eines insbesondere plattenförmigen Druckguss-Bauteils, umfassend die folgenden Schritte:
- wenigstens zwei im Druckgussverfahren hergestellte metallische Basisbauteile (1, 2, 6, 7), die insbesondere plattenförmig ausgebildet sind, werden bereitgestellt,
- die Basisbauteile (1, 2, 6, 7) werden derart nebeneinander positioniert, dass sie im Bereich jeweils wenigstens einer ihrer Außenkanten (1a, 2a) in Anlage kommen,
- die jeweils benachbarten Basisbauteile (1, 2, 6, 7) werden unter Anwendung des Rührreibschweiß-Verfahrens miteinander verschweißt, so dass ein Bauteil (3, 8) erhalten wird,
- das Bauteil (3, 8) wird zumindest im Bereich der Schweißnähte (4) geschliffen,
- das geschliffene Bauteil (3, 8) wird zumindest im Bereich der Schweißnähte (4) poliert,
**dadurch gekennzeichnet, dass**
auf das polierte Bauteil (3, 8) eine Dekorschicht (5) aufgebracht wird, wobei die Basisbauteile (1, 2, 6, 7) auf einer Rückseite, die einer späteren Dekorseite gegenüberliegt, derart unter Anwendung des Rührreibschweiß-Verfahrens miteinander verschweißt werden, dass sich die Schweißnähte (4) bis zur späteren Dekorseite erstrecken, das Bauteil (3, 8) auf seiner späteren Dekorseite zumindest im Bereich der Schweißnähte (4) geschliffen und poliert wird, und die Dekorschicht (5) auf die geschliffene und polierte Seite des Bauteils (3, 8) aufgebracht wird.

2. Verfahren nach Anspruch 1, **dadurch gekennzeichnet, dass** als Dekorschicht eine Metallschicht (5) insbesondere galvanisch auf das Bauteil (3, 8) aufgebracht wird.

3. Verfahren nach Anspruch 2, **dadurch gekennzeichnet, dass** die Dekorschicht (5) aus Kupfer-, Nickel- oder Chrom oder einer Kupfer-, Nickel- oder Chromlegierung besteht.

4. Verfahren nach Anspruch 1, **dadurch gekennzeichnet, dass** als Dekorschicht (5) eine Lackschicht auf das Bauteil (3, 8) aufgebracht wird.

5. Verfahren nach Anspruch 4, **dadurch gekennzeichnet, dass** die Lackschicht abschließend poliert wird.

6. Verfahren nach einem der vorhergehenden Ansprüche, **dadurch gekennzeichnet, dass** die plattenförmigen Basisbauteile (1, 2, 6, 7) eine rechteckige oder quadratische Grundform aufweisen.

7. Verfahren nach einem der vorhergehenden Ansprüche, **dadurch gekennzeichnet, dass** die plattenförmigen Basisbauteile (1, 2, 6, 7) aus einer Zink-, einer Aluminium- oder einer Magnesiumlegierung bestehen.

8. Druckguss-Bauteil, hergestellt durch ein Verfahren nach einem der vorhergehenden Ansprüche, mit wenigstens zwei, unter Anwendung des Rührreibschweißverfahrens miteinander verschweißten metallischen, insbesondere plattenförmigen Druckguss-Basisbauteilen (1, 2, 6, 7), die zumindest im Bereich der Schweißnähte (4) eine geschliffene und polierte Oberfläche aufweisen und mit einer auf die verschweißten, geschliffenen und polierten Basisbauteile (1, 2, 6, 7) aufgebrachten Dekorschicht (5).

## Claims

1. Method for manufacturing an in particular plate-shaped pressure casting component, comprising the following steps:
- providing at least two metallic basic components (1, 2, 6, 7) that are manufactured by means of a pressure casting method and are in particular formed in a plate-shaped manner,
- positioning the basic components (1, 2, 6, 7) next to each other in such a manner that they come into abutment in the area of respectively at least one of their outer edges (1a, 2a),
- welding together the respectively neighboring basic components (1, 2, 6, 7) by using the friction stir welding method, so that a component (3, 8) is obtained,
- sanding the component (3, 8) at least in the area of the weld seams (4),
- polishing the sanded component (3, 8) at least in the area of the weld seams (4), and
**characterized in that**
a decor layer (5) is applied onto the polished component (3, 8), wherein, on a backside that is located opposite a later decor side, the basic components (1, 2, 6, 7) are welded together in such a manner by using a friction stir welding method that the weld seams (4) extend up to the later decor side, the component (3, 8) is sanded and polished on its later decor side at least in the area of the weld seams (4), and the decor layer (5) is applied to the sanded and polished side of the component (3, 8).

2. Method according to claim 1, **characterized in that** a metal layer (5) is applied to the component (3, 8) as the decor layer, in particular galvanically.

3. Method according to claim 2, **characterized in that** the decor layer (5) consists of copper, nickel or chrome, or of a copper, nickel or chrome alloy.

4. Method according to claim 1, **characterized in that** a varnish layer is applied to the component (3, 8) as the decor layer (5).

5. Method according to claim 4, **characterized in that,** as a final step, the varnish layer is polished.

6. Method according to any of the preceding claims, **characterized in that** the plate-shaped basic components (1, 2, 6, 7) have a substantially rectangular or square basic shape.

7. Method according to any of the preceding claims, **characterized in that** the plate-shaped basic components (1, 2, 6, 7) consist of a zinc, aluminum or magnesium alloy.

8. Pressure casting component that is manufactured by means of a method according to any of the preceding claims, with at least two metallic, in particular plate- shaped, pressure casting basic components (1, 2, 6, 7) that are welded together by means of a friction stir welding method and have a sanded and polished surface at least in the area of the weld seams (4), and with a decor layer (5) that is applied to the welded-together, sanded and polished basic components (1, 2, 6, 7)

## Revendications

1. Procédé de fabrication d'un composant coulé sous pression, notamment en forme de plaque, comprenant les étapes suivantes :
- au moins deux composants de base (1, 2, 6, 7) métalliques fabriqués par procédé de coulage sous pression, qui sont notamment réalisés en forme de plaque, sont fournis,
- les composants de base (1, 2, 6, 7) sont positionnés les uns à côté des autres de manière à venir en appui au niveau de respectivement au moins une de leurs arêtes extérieures (1a, 2a),
- les composants de base (1, 2, 6, 7) respectivement avoisinantes sont soudés entre eux par utilisation du procédé de soudage par agitation-friction de sorte à obtenir un composant (3, 8),
- le composant (3, 8) est affûté au moins dans la zone des joints de soudure (4),
- le composant (3, 8) affûté est poli au moins dans la zone des joints de soudure (4),
**caractérisé en ce qu'**
une couche décorative (5) est appliquée sur le composant (3, 8) poli, les composants de base (1, 2, 6, 7) étant soudés l'un à l'autre par application du procédé de soudage par friction-malaxage, sur un côté arrière qui est opposé à un côté décoratif ultérieur, de manière à ce que les joints de soudure (4) s'étendent jusqu'au côté décoratif ultérieur, **en ce que** le composant (3, 8) est affûté et poli sur son côté décoratif ultérieur au moins dans la partie des joints de soudure (4), et **en ce que** la couche décorative (5) est appliquée sur le côté affûté et poli du composant (3, 8).

2. Procédé selon la revendication 1, **caractérisé en ce qu'**une couche métallique (5) est appliquée, notamment galvaniquement, sur le composant (3, 8) en tant que couche décorative.

3. Procédé selon la revendication 2, **caractérisé en ce que** la couche décorative (5) consiste en cuivre, en nickel ou en chrome ou en un alliage de cuivre, de nickel ou de chrome.

4. Procédé selon la revendication 1, **caractérisé en ce qu'**une couche de vernis est appliquée sur le composant (3, 8) en tant que couche décorative.

5. Procédé selon la revendication 4, **caractérisé en ce que** la couche de vernis est ensuite polie.

6. Procédé selon l'une quelconque des revendications précédentes, **caractérisé en ce que** les composants de base (1, 2, 6, 7) en forme de plaque présentent une forme de base rectangulaire ou carrée.

7. Procédé selon l'une quelconque des revendications précédentes, **caractérisé en ce que** les composants de base (1, 2, 6, 7) en forme de plaque consistent en un alliage de zinc, un alliage d'aluminium ou un alliage de magnésium.

8. Pièce coulée sous pression, fabriquée au moyen d'un procédé selon l'une quelconque des revendications précédentes, comprenant au moins deux composants de base (1, 2, 6, 7) métalliques coulés sous pression, notamment en forme de plaque, soudés entre eux par utilisation du procédé de soudage par friction-malaxage, lesquels présentent au moins dans la partie des joints de soudage (4) une surface affûtée et polie et comprenant une couche décorative (5) appliquée sur les composants de base (1, 2, 6, 7) soudés, affûtés et polis.
